# EUROPEAN PATENT SPECIFICATION

(11) **EP 2 756 315 B1**
(45) Date of publication and mention of the grant of the patent: **27.07.2016**
(21) Application number: 12831432.5
(22) Date of filing: 04.09.2012
(51) Int. Cl.: G01P 3/487, G01D 5/14, G01D 5/20, F01L 1/047, F01L 1/46, F02D 41/38, F02M 59/10, F02M 59/44

(54) **DEVICE FOR MEASURING MOVEMENT OF A ROTATING BODY**
VORRICHTUNG ZUR ERFASSUNG VON BEWEGUNGEN EINES ROTIERENDEN KÖRPERS
DISPOSITIF PERMETTANT DE MESURER LE MOUVEMENT D'UN CORPS ROTATIF

(30) Priority: 14.09.2011 SE 1150828
(43) Date of publication of application: 23.07.2014
(73) Proprietor: Scania CV AB, 151 87 Södertälje (SE)
(72) Inventor: JONSSON, Stefan, 192 70 Sollentuna (SE); DERAEDT, Anne-Lise, S-151 46 Södertälje (SE)
(74) Representative: Scania CV AB
(86) International application number: PCT/SE2012/050935
(87) International publication number: WO 2013/039441

(56) References cited:
- DE-A1-102009 028 392
- DE-A1-102009 028 392
- JP-U- S54 124 805
- US-A- 3 731 527
- US-A1- 2006 222 517
- US-A1- 2008 116 884
- US-A1- 2008 295 807
- US-B1- 6 213 075
- CHRISTOPHE PFISTER, SOEREN BERNHARDT AND ULRICH SPICHER: "Use of Ceramic Components in Sliding Systems forHigh-Pressure Gasoline Fuel Injection Pumps", SAE, no. 2010-01-0600, 4 December 2010 (2010-12-04), XP002736640,
- S. P. GLADYSHEV, V. V. SHESHUKOV AND P. S. GLADYSHEV: "Transformer Based Sensor Of The High PressureFuel Pump Rod Position (SP-1356)", SAE, no. 980165, 23 February 1998 (1998-02-23), - 26 February 1998 (1998-02-26), XP002736641, International Congress and Exposition, Detroit, Michigan
- DAVID BARNES, ROBERT MCDONALD,CLIVE HILL AND PETER VAN MANEN: "Motorsports Sensor Technology", SAE, no. 2000-01-3566, 13 November 2000 (2000-11-13), XP002736642, Dearborn, Michigan

## Description

### TECHNICAL FIELD

The invention relates to a device for measuring a movement and to a combustion engine and a vehicle with such a device. In particular the invention describes a device for measuring the speed at which the pump piston's roller moves towards the camshaft in an injection system of a combustion engine of a heavy vehicle.

### BACKGROUND

One way of reducing the discharge of emissions from diesel engines is to inject the fuel at very high pressure. A so-called "common rail" system is commonly used for injection at high pressure into a diesel engine's combustion spaces. A common rail system comprises a high-pressure pump which pumps fuel at high pressure to an accumulator tank (the "common rail"). The pressure in the accumulator tank during operation may be within the range 250 to 1600 bar. The fuel in the accumulator tank is intended to be distributed to all of the engine's cylinders. It is injected into the combustion spaces of the respective cylinders by electrically controlled injection means. The injection means comprise injection valves which have to be capable of opening and closing very quickly. The injection means are controlled by an electrical control unit which substantially continuously calculates the amount of fuel to be supplied to the respective cylinders on the basis of information from various engine parameters, e.g. the load upon and speed of the engine.

The high-pressure pump is a piston pump in which the piston is controlled by a roller which is journalled on a shaft at the lower edge of the piston and abuts against the cams on a camshaft. The pump has a camshaft of its own which, independently of the engine's camshaft, can control the pressure in the accumulator tank. This makes it possible for fuel injection to take place as necessary and several times per cycle, helping to achieve quieter and more even running of the engine and affording advantages with regard to emissions.

For optimum operation of the high-pressure pump, the abutment between the roller and the cams needs to be perfect. When the engine is running, it is lubricated and cooled continuously by means of oil which is thus exposed to high temperatures which have the adverse effect of causing it to become acid and corrosive. The shaft on which the roller is journalled is normally made of brass and, when exposed to degenerated oil, undergoes corrosion and increase in its diameter. This means that the roller will not rotate freely about the shaft and that sliding will occur between the roller and the camshaft, causing wear on the camshaft's cams which may gradually lead to their disintegrating and to adverse effects on the injection into the engine.

JP S54 124805 U discloses a hall sensor position close to rollers in a distribution high pressure fuel injection pump.

US2008/0116884 describes a magnetic sensor usable for measuring the rotation speed of a shaft in a vehicle. The sensor is bulky and freestanding from the vehicle's components which are to be measured. It is impossible to use such a sensor in situations of limited space.

There is thus a need for an improved and less bulky sensor which can measure the speed of movement of a roller towards the shaft in order to be able to detect sliding.

### OBJECT OF THE INVENTION

An object of the invention is to propose a device which solves the problems of the state of the art. In particular, the invention aims at a device for measuring the speed of the roller in a piston pump in an injection system pertaining to a combustion engine in order to be able to detect sliding of the roller.

### SUMMARY OF THE INVENTION

The invention solves the above problems by means of a device according to claim 1. The roller being magnetic means that its speed can be measured directly on one of the components of the piston pump, so only a small number of components have to be added to the pump to make it possible to perform the measurement, which is advantageous in that the available space is very limited. Nor is any machining of the roller's surface required, which means that the contact surface between the roller and the cams is unaltered. Nor is the lubrication of the roller affected. The sensor being situated within the pump close to the pump cavity results in compact installation of the sensor with minimum effects on the pump's other components. Thus the device according to the invention becomes inexpensive and easy to install.

In one embodiment of the invention the sensor is a magnetic field sensor.

In another embodiment it is a Hall sensor, which is a usual type of readily available magnetic field sensor. Hall sensors are also small enough to be accommodated in the limited space in the pump piston. The measurement value of a Hall sensor is independent of the rotation speed of the roller, resulting in equally good signals irrespective of how fast the roller rotates.

In a further embodiment the roller is magnetised before being fitted. Imposing a given magnetic field on the roller provides assurance that the measurement signals will be strong enough to be measurable and reduces the risk of the roller having too weak a magnetic field.

In one embodiment the sensor is connected to a control unit adapted to identifying sliding movements of the roller on the basis of the signal monitored. When the control unit detects sliding of the roller, this can for example be brought to the attention of a handler or service technician so that steps can be taken to prevent further wear.

In another embodiment the invention forms part of a common rail type of fuel injection system of a combustion engine and the piston pump takes the form of a high-pressure pump. This means that the invention can be employed to detect wear which occurs on the camshaft's cams when the roller slides against them instead of only rolling. The result is better operational reliability of the fuel injection system.

The invention relates also to a combustion engine with a device according to the invention, and to a vehicle with such an engine.

### LIST OF DRAWINGS

Figure 1 depicts schematically a vehicle according to the invention.
Figure 2 depicts schematically the injection system for an engine according to the invention.
Figure 3 depicts schematically a high-pressure pump for the fuel injection according to the invention.
Figure 4 is a schematic perspective view of a pump piston according to the invention.
Figure 5 is a schematic view from below of a pump piston according to the invention, with a sensor fitted.
Figure 6 depicts schematically a roller according to the invention.
Figure 7 depicts a measurement signal for the speed of the roller.
Figure 8 depicts a measurement signal for the speed of the roller where sliding has occurred.

### DETAILED DESCRIPTION OF THE INVENTION

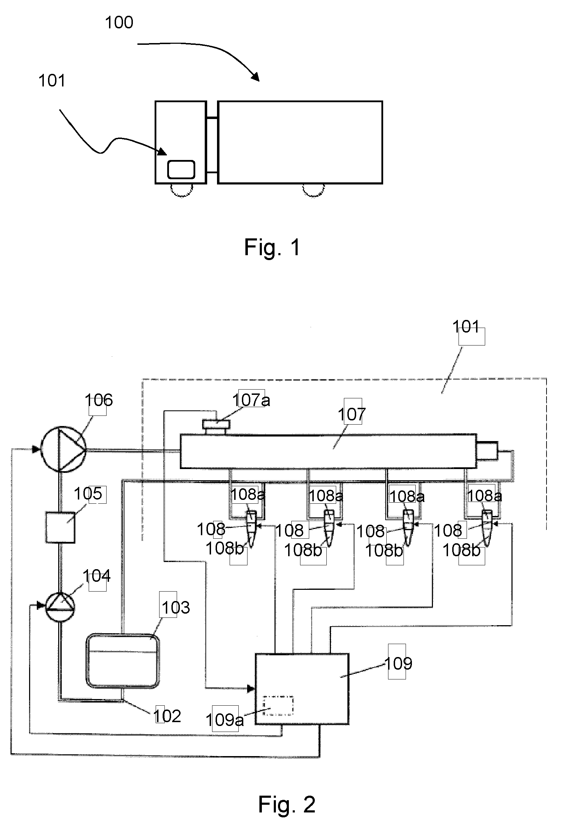

Figure 1 depicts schematically a vehicle 100 with a combustion engine 101 according to the invention. It takes the form of a heavy truck but the invention may also be employed on other types of vehicle, e.g. site machines and buses, or freestanding engines as in standby power plants or on watercraft.

Figure 2 depicts an injection system for injecting fuel at very high pressure in a combustion engine in the form of a schematically indicated diesel engine 101. Injecting the fuel at very high pressure reduces discharges of emissions from the engine. The injection system comprises a fuel line 102 for supplying fuel from a fuel tank 103 to the engine's cylinders. A fuel pump 104 is provided in the fuel line to convey fuel from the fuel tank 103 to a high-pressure pump 106 via a filter 105. The high-pressure pump is adapted to pressurising the fuel so that it is fed at high pressure into an accumulator tank 107 in the form of a so-called common rail. Injection means 108 are provided at each of the connections between the accumulator tank and the engine's respective cylinders. Each of these injection means is provided with a pressure booster 108a to make it possible to inject the fuel by means of an injection valve 108b at a still higher pressure p₂ than the pressure p₁ which prevails in the accumulator tank. An electrical control unit 109 is intended to control the operation of the fuel pump 104, the high-pressure pump 106 and the injection means 108 and may take the form of a computer unit provided with suitable software 100a for conducting such control. A pressure sensor 107a is fitted in the accumulator tank to monitor the prevailing pressure p₁ therein and send to the control unit a signal which conveys information about pressure values monitored.

During operation of the diesel engine 101, the control unit 109 substantially continuously receives control signals concerning engine parameters, e.g. the load upon and speed of the engine. It uses this information to calculate the amounts of fuel to be supplied to the engine's cylinders. It also receives information concerning the instantaneous pressure p₁ in the accumulator tank from the pressure sensor 107a and can therefore estimate the second pressure p₂ on the basis of knowing the characteristics of the pressure booster 108a. It can use inter alia this information to regulate the injection valves 108b so that they open and close at times such that a desired amount of fuel at the high second pressure p₂ can be injected into the engine's respective cylinders.

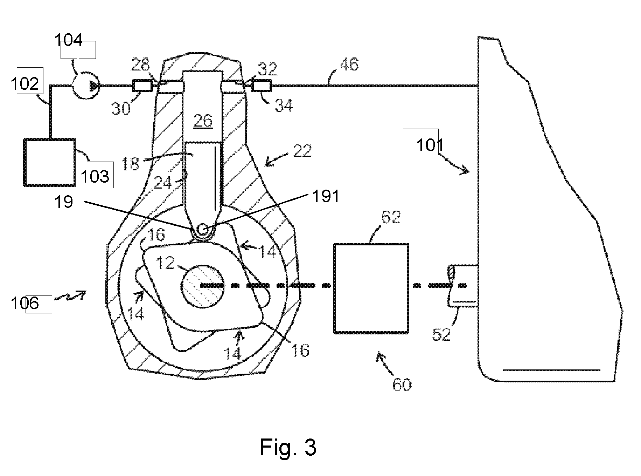

Figure 3 depicts the high-pressure pump 106 in detail. It is provided with three cylinders arranged in line, only one of which appears in Figure 3. For its running, the high-pressure pump has a camshaft 12 with three cams 14, 14, 14 which each have two opposite cam lobes 16, 16. Each cam 14 is in cam engagement with a respective pump piston 18 (only one is depicted) which is journalled for movement in a cylinder barrel 24 in a pump housing 22. Each pump piston 18 is bounded upwards by a pump chamber 26 in the cylinder barrel 24. An undepicted spring situated in the pump chamber 26 abuts against the pump piston 18 and the upper end of the pump chamber 26. It presses on the pump piston to cause it continually to abut against the cams 14 of the camshaft 12. Each pump chamber 26 has an inlet 28 and an outlet 32. Respective valves 30 and 34 for dosing of fuel to and from the pump housing 22 are situated close to the inlet 28 and outlet 32.

Fuel is fed to the high-pressure pump 106 via a feedpump 104 from the fuel tank 103 through an inlet line 102. It is thereafter fed out at high pressure from the fuel pump to the engine via an outlet line 46. The camshaft 12 of the fuel pump 106 is driven by an output shaft 52 of the engine 101 via a driving transmission 60 which typically comprises a gear arrangement 62 not depicted in more detail.

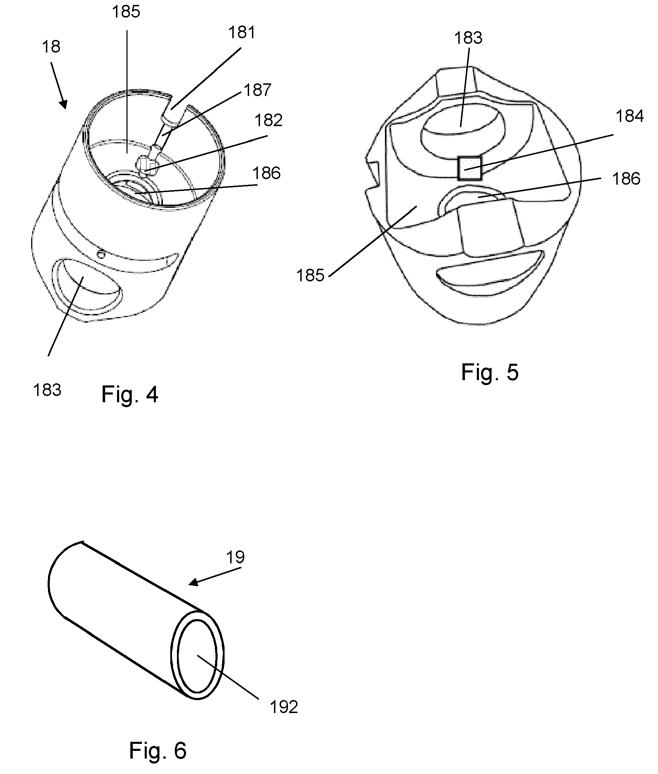

Figure 4 depicts a pump piston 18 according to the invention which is hollow and is divided at approximately half its height by an internal wall 185 in which there is an aperture 186 through which oil can flow for lubrication. In the piston's shell surface there is at the upper edge a recess 181 leading to a channel 187 in the inside surface of the piston's shell. This channel continues along the internal wall 185 to a hole 182 which leads through the internal wall. There is at the lower edge of the piston a recess 183 in which a roller 19 is journalled on a shaft 191 (see Figure 3).

Figure 5 depicts the pump piston 18 according to the invention as seen from below. A sensor 184 is situated close to the recess 183 and thus comes close to the magnetic roller 19 and can measure the periodic signal which occurs when the roller rotates.

Fitting the sensor involves drawing the cables through the recess 181, the channel 187 and the hole 182 so that the sensor can be fitted close to the recess 183. It is very important that the cables to the sensor be fitted in such a way as not to be damaged during the piston's movement in the pump housing 22. It is therefore desirable that the channel 187 be made as deep as possible and that the cables be fastened securely, e.g. with adhesive or tape.

The roller 19 is depicted in more detail in Figure 6 and takes the form of a circular cylinder which has running through it a hole 192 in which the shaft 191 is inserted at fitting stage. The roller is made of ferromagnetic material and already has a certain magnetic field at manufacturing stage. This magnetic field does however differ from one manufacturing batch to another and may be very weak. For certainty about its magnetic field, the roller is magnetised in a conventional way before being fitted on the pump piston 18, by a certain specific magnetic field imposed upon the roller. This magnetisation involves an outer magnetic field being imposed upon the roller so that its material will maintain a certain magnetic field after the outer field has been removed. As the outer magnetic field is known, the magnetic field which the roller will still have after the outer magnetic field has been removed is also known.

The roller 19 may be made of low-alloy steel with at least 0.98% C and 1.30-1.60% Cr and can therefore serve as a permanent magnet. Other alloys and magnetisation methods are also possible. What is central to the invention is that the roller can be provided with a given magnetic field which it retains over its service life.

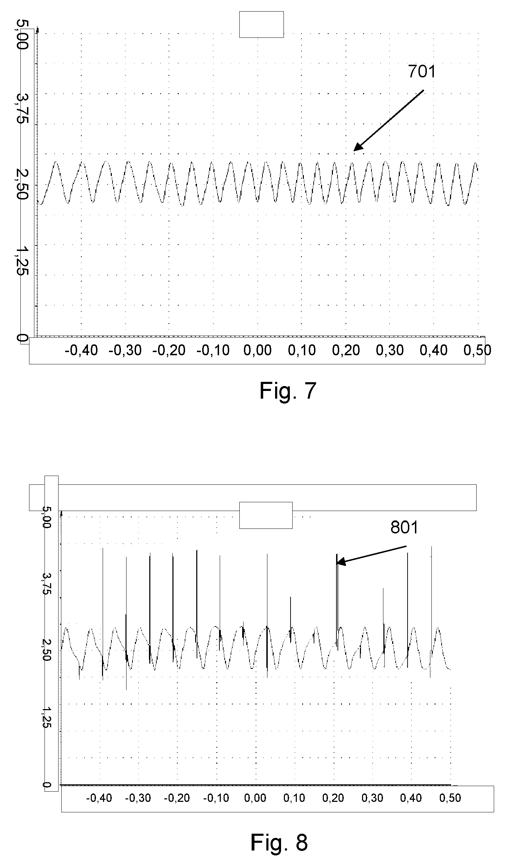

When the roller 19 moves towards the cams 14 of the camshaft 12, its magnetic field will give rise to a periodic signal, see Figure 7. The sensor 184 may for example send the measurement signal to the control unit 109. When the roller moves towards the camshaft without sliding, the signal will be continuous, as depicted in the form of a regular sine curve 701 in Figure 7, with the amplitude of the measured magnetic field on the y axis and time on the x axis. In contrast, if sliding occurs there will be horizontal timeshifts during the portion of the pump cycle in which the roller performs a sliding movement towards the camshaft. Sliding reduces the rotation speed of the roller, causing said timeshifts. In Figure 8, high peaks 801 have also occurred in conjunction with the sliding, and their presence may also be used as an indication that sliding has occurred. Figure 8 has the amplitude of the measured magnetic field on the y axis and time on the x axis. If sliding is detected, the control unit may be adapted to delivering a corresponding signal to an indicating means, e.g. the driver may be provided with a warning by a message lighting up on the information cluster. Alternatively, the control unit may be provided with a memory which stores the information about sliding, which can be read as a fault code when the engine is at a workshop.

The invention results in a device for detecting wear on the camshaft of a high-pressure pump in an injection system of a combustion engine. Magnetising the roller of the piston pump which abuts against the camshaft and measuring the resulting periodic signal makes it possible to detect sliding between the roller and the camshaft. The signal may be processed by a control unit which can make a driver or service technician aware that sliding has occurred, so that the problem can be dealt with before the cams on the camshaft disintegrate or some other damage occurs at the contact between the pump piston and the camshaft.

The invention is defined by the attached claims.

## Claims

1. A device for a piston pump comprising
a pump housing (22),
a pump piston (18) which is arranged to be movable in a cylinder barrel (24) in the pump housing (22) and supports at its lower end a rotatably journalled roller (19) which abuts against a cam (14) on a camshaft (12) in order, during operation, to impart reciprocating pumping movements to the pump piston (18), which roller (19) is rotatably journalled on a shaft (191) situated at the lower end of the pump piston (18),
**characterised in that** the roller (19) is magnetic and that a sensor (184) is fitted inside the pump piston (18) to monitor the magnetic field of the rotating roller.

2. A device according to claim 1, **characterised in that** the sensor (184) is a Hall sensor.

3. A device according to any one of the above claims, **characterised in that** the roller (19) is magnetised before being fitted.

4. A device according to any one of the above claims, **characterised in that** the sensor (184) is connected to a control unit (109) which is adapted to using the signal monitored to identify sliding movements of the roller.

5. A device according to claim 4, **characterised in that** the control unit (109) is adapted to delivering a signal if sliding movements of the roller (19) are detected.

6. A device according to any one of the above claims, **characterised in that** the device is part of a common rail type of fuel injection system of a combustion engine (101) and that the piston pump takes the form of a high-pressure pump (106).

7. A combustion engine (101), **characterised in that** it is provided with a device according to any one of the above claims.

8. A vehicle (100) **characterised in that** it is provided with a combustion engine (101) according to claim 7.

## Patentansprüche

1. Vorrichtung für eine Kolbenpumpe, umfassend
ein Pumpengehäuse (22),
einen Pumpenkolben (18), der beweglich in einem Zylinderrohr (24) in dem Pumpengehäuse (22) angeordnet ist und an seinem unteren Ende eine drehbar gelagerte Walze (19) unterstützt, die an einer Nocke (14) auf einem Nockenschaft (12) anliegt, um bei Betrieb, hin- und hergehende Pumpbewegungen auf den Pumpenkolben (18) zu übertragen, wobei die Walze (19) drehbar auf einem auf der unteren Seite des Pumpenkolbens (18) angeordneten Schaft (191) gelagert ist,
**dadurch gekennzeichnet, dass** die Walze (19) magnetisch ist und dass ein Sensor (184) innerhalb des Pumpenkolbens (18) eingebaut ist, um das magnetische Feld der rotierenden Walze zu überwachen.

2. Vorrichtung nach Anspruch 1,
**dadurch gekennzeichnet, dass** der Sensor (184) ein Hall-Sensor ist.

3. Vorrichtung nach einem vorangegangen Ansprüche,
**dadurch gekennzeichnet, dass** die Walze (19), bevor sie eingebaut wird, magnetisiert wird.

4. Vorrichtung nach einem vorangegangen Ansprüche,
**dadurch gekennzeichnet, dass** der Sensor (184) mit einer Steuereinheit (109) verbunden ist, die ausgebildet ist, um mit dem überwachten Signal gleitende Bewegungen der Walze zu identifizieren.

5. Vorrichtung nach Anspruch 4, **dadurch gekennzeichnet, dass** die Steuereinheit (109) ausgebildet ist, ein Signal zu übertragen, wenn gleitende Bewegungen der Walze (19) erfasst werden.

6. Vorrichtung nach einen der vorangegangen Ansprüche, **dadurch gekennzeichnet, dass** die Vorrichtung Teil eines Common-Rail Kraftstoff-Einspritzsystems eines Verbrennungsmotors (101) ist und dass die Kolbenpumpe als eine Hochdruckpumpe (106) ausgebildet ist.

7. Verbrennungsmotor (101), **dadurch gekennzeichnet, dass** er mit einer Vorrichtung nach einem der vorangegangen Ansprüche ausgestattet ist.

8. Fahrzeug (100), **dadurch gekennzeichnet, dass** es mit einem Verbrennungsmotor (101) nach Anspruch 7 ausgestattet ist.

## Revendications

1. Dispositif pour une pompe à piston, comprenant :
un boîtier de pompe (22),
un piston de pompe (18), qui est agencé de façon à pouvoir se déplacer dans un fût de cylindre (24) dans le boîtier de pompe (22) et qui supporte, à son extrémité inférieure, un rouleau pivotant de façon rotative (19) qui bute contre une came (14) sur un arbre à came (12), afin, lors du fonctionnement, de communiquer des mouvements de pompage en va-et-vient au piston de pompe (18), ce rouleau (19) pivotant de façon rotative sur un arbre (191) situé à l'extrémité inférieure du piston de pompe (18),
**caractérisé en ce que** le rouleau (19) est magnétique, et **en ce qu'**un capteur (184) est disposé à l'intérieur du piston de pompe (18) de façon à contrôler le champ magnétique du rouleau rotatif.

2. Dispositif selon la revendication 1, **caractérisé en ce que** le capteur (184) est un capteur à effet Hall.

3. Dispositif selon l'une quelconque des revendications ci-dessus, **caractérisé en ce que** le rouleau (19) est magnétisé avant d'être installé.

4. Dispositif selon l'une quelconque des revendications ci-dessus, **caractérisé en ce que** le capteur (184) est connecté à une unité de commande (109) qui est adaptée à utiliser le signal contrôlé pour identifier des mouvements de glissement du rouleau.

5. Dispositif selon la revendication 4, **caractérisé en ce que** l'unité de commande (109) est adaptée à délivrer un signal si des mouvements de glissement du rouleau (19) sont détectés.

6. Dispositif selon l'une quelconque des revendications ci-dessus, **caractérisé en ce que** le dispositif fait partie d'un système d'injection de carburant du type à rail commun d'un moteur à combustion (101), et **en ce que** la pompe à piston prend la forme d'une pompe à haute pression (106).

7. Moteur à combustion (101), **caractérisé en ce qu'**il est muni d'un dispositif selon l'une quelconque des revendications ci-dessus.

8. Véhicule (100), **caractérisé en ce qu'**il est muni d'un moteur à combustion (101) selon la revendication 7.
